# EUROPEAN PATENT APPLICATION

(11) **EP 4 770 006 A1**
(43) Date of publication of application: **01.07.2026**
(21) Application number: 24874582.0
(22) Date of filing: 01.10.2024
(51) Int. Cl.: H04L 9/12

(54) **QUANTUM KEY DELIVERY NETWORK, LINK SETTING METHOD FOR KEY RELAY, DATA RELAY SYSTEM, AND DATA RELAY METHOD**

(30) Priority: 04.10.2023 JP 2023172625
(71) Applicant: National Institute of Information and Communications Technology, Koganei-shi, Tokyo 184-8795 (JP)
(72) Inventor: FUJIWARA Mikio, Koganei-shi, Tokyo 184-8795 (JP); SASAKI Masahide, Koganei-shi, Tokyo 184-8795 (JP)
(74) Representative: Reichert & Lindner Partnerschaft Patentanwälte
(86) International application number: PCT/JP2024/035038
(87) International publication number: WO 2025/074980

(57) **Abstract**

A quantum key distribution network (NW_{QKD}) includes a plurality of QKD nodes (10) and a QKDN controller (20). The plurality of QKD nodes (10) perform key relays by a quantum key distribution link (L) and a network thereof. The QKDN controller (20) divides the plurality of QKD nodes (10) into a plurality of independent colonies (C) so as to equalize throughputs of the key relays, and sets routes from a colony (C_{S}) including a first QKD node (10_{S}) that is a start point of the key relays to a colony (C_{R}) including a second QKD node (10ᵣ) that is an end point of the key relays so that a route for each key traverses a different colony (C) so that a single QKD node (10) does not supply keys to a plurality of routes.

## Description

### Technical Field

The present invention relates to a quantum key distribution network, a key relay link setting method, a data relay system, and a data relay method.

### Background Art

A quantum key distribution (QKD) network enables data transmission that is information-theoretically secure by performing a key relay of a cryptographic key at nodes (QKD nodes), which serve as "trusted nodes", together with the use of one time pad (OTP) encryption.

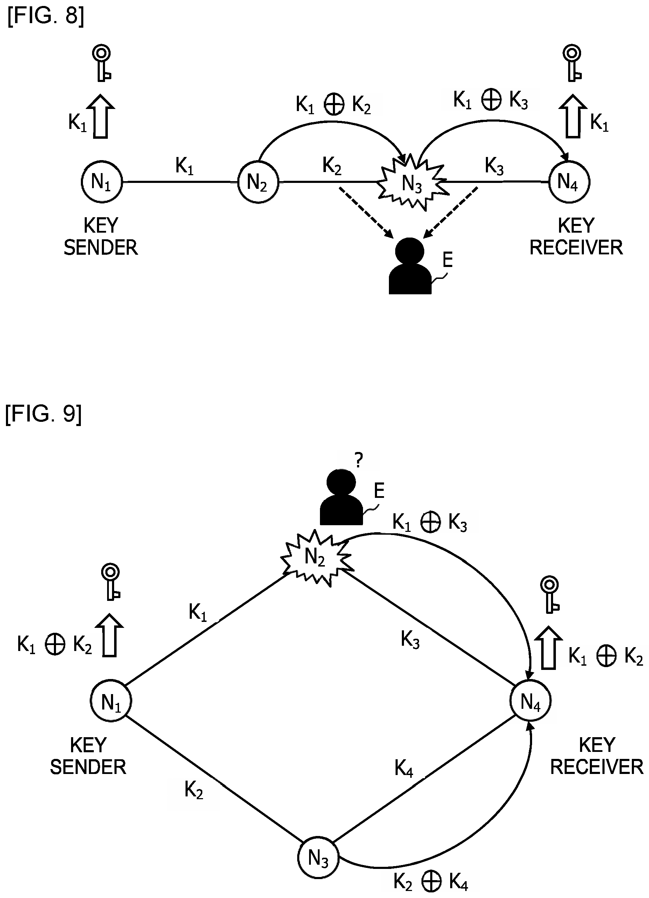

For example, as shown in FIG. 8, a key K₁ that serves as a cryptographic key may be delivered from a node N₁ of a key sender to a node N₄ of a key receiver by a key relay, using nodes N₂ and N₃ as relay nodes.

In the example of FIG. 8, the key K₁ is shared between the nodes N₁ and N₂, a key K₂ is shared between the nodes N₂ and N₃, and a key K₃ is shared between the nodes N₃ and N₄ by quantum key distribution.

Then, the node N₂ transmits a value of an exclusive OR of the keys K₁ and K₂ to the node N₃ via a communication line, and the node N₃ transmits a value of an exclusive OR of the keys K₁ and K₃ to the node N₄ via a communication line. The node N₄ obtains the key K₁ by calculating an exclusive OR of the value of the exclusive OR of the keys K₁ and K₃ obtained via a communication line and the key K₃ shared with the node N₃ by quantum key distribution.

In such a case, a node may be compromised due to some trouble, and a key may be leaked. For example, when the node N₃ is compromised and the keys K₂ and K₃ shared by quantum key distribution are leaked, an eavesdropper E may easily obtain the key K₁ from the value of the exclusive OR of the keys K₁ and K₃ and the value of the exclusive OR of the keys K₁ and K₃ transmitted via a communication line.

To reduce such a risk as much as possible, a security requirement imposed on the nodes to be a "trusted node" may become excessively high.

A method is known in which a plurality of keys are delivered by key relaying through a plurality of different routes, which may enable key relaying to be performed while relaxing the level of security required for nodes to function as "trusted nodes".

For example, as shown in FIG. 9, a plurality of keys, key K₁ and key K₂, for generating a cryptographic key (an exclusive OR of the keys K₁ and K₂, or the like) are delivered from a node N₁ of a key sender to a node N₄ of a key receiver through different routes and by quantum key distribution.

In the example of FIG. 9, the key K₁ is relayed by key relaying through a route of nodes N₁ → N₂ → N₄, and the key K₂ is relayed by key relaying through a route of nodes N₁ → N₃ → N₄.

In this case, even when the node N₂ is compromised and the keys K₁ and K₃ are leaked, because the key K₂ is delivered through another route, an eavesdropper E may not obtain the cryptographic key (an exclusive OR of the keys K₁ and K₂, or the like).

When this method is used, because a plurality of keys is to be distributed across different routes, it becomes necessary to impose a condition that a relay node should not participate in key relays of different routes.

A route for such key relaying is typically determined by using a Dijkstra's algorithm, by which a route with a smallest key consumption is searched (see non-patent Literatures 1 and 2).

### Citation List

### Non Patent Literature

Patent Literature 1: J. Jia, B. Dong, L. KangLe, H. Xie, B. Guo, "Cost-Optimization-Based Quantum Key Distribution over Quantum Key Pool Optical Networks", Entropy 2023, 25 (4), 661. https://doi.org/10.3390/e25040661
Non-patent Literature 2: M. Sniedovich, "Dikstra's algorithm revisited: the dynamic programming connexion", Control and cybernetics, vol. 35, pp. 599 - 620, 2006.

### Summary of Invention

### Technical Problem

In a conventional method of performing key relaying of a plurality of keys through a plurality of different routes, a Dijkstra's algorithm is used to successively search an optimal route under the condition that a relay node does not participate in key relays of different routes.

Therefore, there is a problem that the performance of an entire system becomes limited by a route having the worst throughput out of the plurality of routes that are searched.

An object of the present invention is to provide a quantum key distribution network, a key relay link setting method, a data relay system, and a data relay method that may enable throughput efficiency to be equalized across a plurality of routes in key relays over the plurality of routes in quantum key distribution.

### Solution to Problem

To achieve the above object, an aspect of the present invention provides a quantum key distribution network that independently distributes, by quantum key distribution, a plurality of keys used for generating a shared cryptographic key. The quantum key distribution network includes a plurality of nodes configured to perform key relays by a quantum key distribution link and a network thereof, and a controller configured to perform network management. The controller is configured to divide the plurality of nodes into a plurality of independent node collections so as to equalize throughputs of the key relays, and set routes from a node collection including a first node that is a start point of the key relays to a node collection including a second node that is an end point of the key relays so that a route for each key traverses a different node collection so that a single node does not supply keys to a plurality of routes. For each of the keys, a key relay from the first node that is the start point to the second node that is the end point is performed through a respective route that is different for each key and that has been set by the controller. The first node that is the start point and the second node that is the end point generate the shared cryptographic key by performing an exclusive OR or a concatenation of the plurality of keys.

According to this configuration, the quantum key distribution network independently delivers a plurality of keys for generating a cryptographic key along different routes from a node collection that includes a start-point node to a node collection that includes an end-point node within node collections that have been configured to divide nodes into collections so as to equalize throughput.

Because node collections are configured to divide nodes into collections so as to equalize throughput, even when the quantum key distribution network performs key relays for a plurality of keys through different routes, throughput of quantum key distribution of each key may be equalized.

To achieve the above object, an aspect of the present invention provides a key relay link setting method for independently distributing a plurality of keys in a quantum key distribution network that is configured to include a plurality of nodes that perform key relays by a quantum key distribution link and a network thereof. The key relay link setting method includes dividing the plurality of nodes into a plurality of independent node collections so as to equalize throughputs of the key relays, and setting routes from a node collection including a first node that is a start point of the key relays to a node collection including a second node that is an end point of the key relays so that a route for each of the keys traverses a different node collection so that a single node does not supply keys to a plurality of routes, by a controller that performs network management of the quantum key distribution network.

According to this method, key relay links may be established for a plurality of keys along different routes from a node collection including a start-point node to a node collection including an end-point node within node collections that have been configured to divide nodes into collections so as to equalize throughputs.

Thus, the key relay link setting method may set independent key relay links for the plurality of keys so that throughputs are substantially equal.

To achieve the above object, an aspect of the present invention provides a data relay system that is supplied with a cryptographic key by a quantum key distribution network for relaying data in a communication network. The quantum key distribution network includes a plurality of nodes configured to perform key relays by a quantum key distribution link and a network thereof, and a controller configured to perform network management. The controller is configured to divide the plurality of nodes into a plurality of independent node collections so as to equalize throughputs of the key relays, and set routes from a node collection including a first node that is a start point of the key relays to a node collection including a second node that is an end point of the key relays so that a route for each of a plurality of keys used for generating the cryptographic key traverses a different node collection so that a single node does not supply keys to a plurality of routes. The data relay system includes a transmission device, relay devices, and a reception device. The transmission device corresponds to the first node that is the start point, encrypts original data with the cryptographic key, and transmits the encrypted original data in a distributed manner as a plurality of shares by a secret sharing scheme. The relay devices correspond to nodes forming a different route for each of the plurality of keys and relay the plurality of shares. The reception device corresponds to the second node that is the end point, receives the plurality of shares, restores by the secret sharing scheme, and obtains the original data through decryption using the cryptographic key.

According to this configuration, because the data relay system performs, in a quantum key distribution network, key relays for a plurality of keys, which are used to generate a cryptographic key, via node collections that divide nodes into collections so as to equalize throughputs, throughput of the entire key relays may be equalized. Further, because the data relay system relays shares, which are obtained by splitting data using secret sharing, in accordance with key relay routes with equalized throughputs, original data may efficiently be restored from the shares.

To achieve the above object, an aspect of the present invention provides a data relay method for relaying data in a communication network when a cryptographic key is supplied by a quantum key distribution network. The quantum key distribution network includes a plurality of nodes configured to perform key relays by a quantum key distribution link and a network thereof, and a controller configured to perform network management. The controller is configured to divide the plurality of nodes into a plurality of independent node collections so as to equalize throughputs of the key relays, and set routes from a node collection including a first node that is a start point of the key relays to a node collection including a second node that is an end point of the key relays so that a route for each of a plurality of keys used for generating the cryptographic key traverses a different node collection so that a single node does not supply keys to a plurality of routes. The data relay method includes the following: encrypting original data with the cryptographic key and splitting the encrypted original data into a plurality of shares using a secret sharing scheme by a transmission device corresponding to the first node that is the start point; relaying the plurality of shares through the communication network by distributing the plurality of shares across relay devices that correspond to nodes that form a different route for each of the plurality of keys; and receiving the plurality of shares, restoring by the secret sharing scheme, and obtaining the original data through decryption using the cryptographic key by a reception device that corresponds to the second node that is the end point.

According to this method, because the data relay method performs, in a quantum key distribution network, key relays for a plurality of keys used to generate a cryptographic key via node collections that divide nodes into collections so as to equalize throughputs, throughput of the entire key relays may be equalized. Further, because the data relay method relays shares, which are obtained by splitting data using secret sharing, in accordance with key relay routes with equalized throughputs, original data may efficiently be restored from the shares.

### Advantageous Effects of Invention

According to the present invention, in key relays of a plurality of keys over different routes in quantum key distribution, throughput efficiency may be equalized across a plurality of routes.

### Brief Description of Drawings

**FIG. 1** is a configuration diagram showing an overall configuration of a quantum key distribution network according to a first embodiment of the present invention.
**FIG. 2** is an explanatory diagram for explaining a colony (node collection).
**FIG. 3** is an explanatory diagram for explaining an example of a key relay.
**FIG. 4** is an explanatory diagram for explaining a key relay via a colony.
**FIG. 5** is a sequence diagram showing an operation for performing key relaying of a plurality of keys in the quantum key distribution network according to the first embodiment of the present invention.
**FIG. 6** is a configuration diagram showing an overall configuration of a data relay system according to a second embodiment of the present invention.
**FIG. 7** is an explanatory diagram for explaining a process of relaying data in a distributive manner in the data relay system of FIG. 6.
**FIG. 8** is an explanatory diagram for explaining a key relay in conventional quantum key distribution.
**FIG. 9** is an explanatory diagram for explaining key relaying to transmit a plurality of keys through different routes in conventional quantum key distribution.

### Description of Embodiments

### [Configuration of Quantum Key Distribution Network]

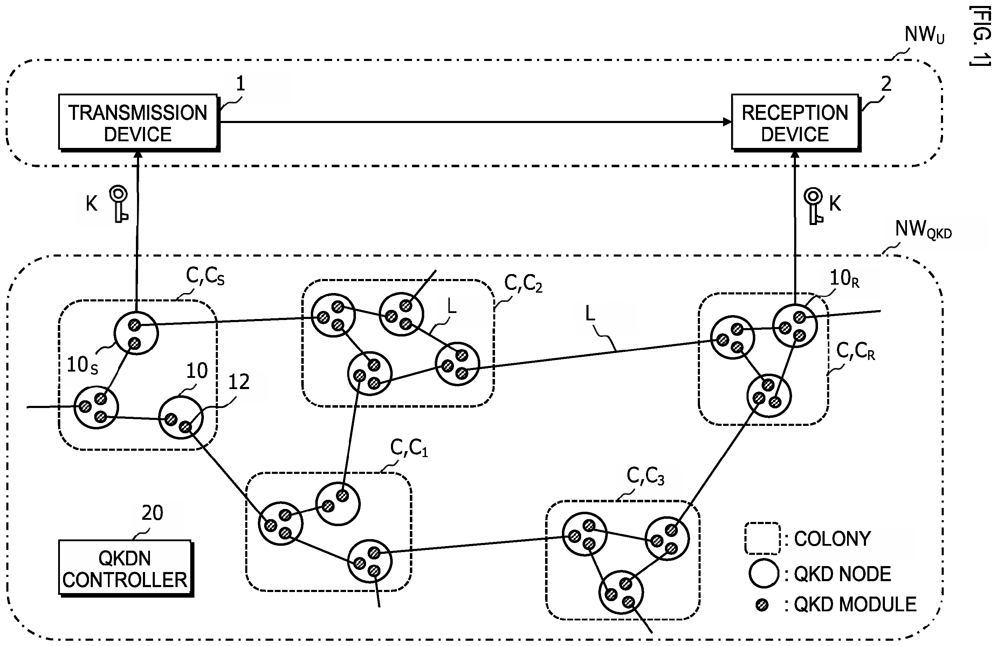

First, with reference to FIG. 1, a configuration of a quantum key distribution network (QKDN) NW_{QKD} according to a first embodiment of the present invention will be described. FIG. 1 is a configuration diagram showing an example of a quantum key distribution network NW_{QKD}.

Here, secure communication is performed from a transmission device 1 to a reception device 2 on a user network NW_{U}, which is an existing communication network (the Internet or the like), by a cryptographic key (a key K) that is supplied from a quantum key distribution network NW_{QKD}.

The transmission device 1 is configured to encrypt (one-time pad encryption) data with the cryptographic key (key K) supplied from the quantum key distribution network NW_{QKD} (here, from a QKD node 10_{S}) and transmit the encrypted data to the reception device 2 by secure communication.

The reception device 2 is configured to decrypt the encrypted data received from the transmission device 1 with a cryptographic key (the key K) supplied from the quantum key distribution network NW_{QKD} (here, from a QKD node 10_{R}).

The shared cryptographic key (key K) supplied to the transmission device 1 and the reception device 2 is delivered from the QKD node 10s to the QKD node 10_{R} of the quantum key distribution network NW_{QKD} by key relaying.

The transmission device 1 and the reception device 2 may each be integrated with a corresponding QKD node 10 (10_{S}, 10_{R}).

The quantum key distribution network NW_{QKD} is configured to distribute a plurality of keys, which are used for generating the cryptographic key, independently by quantum key distribution.

As shown in FIG. 1, the quantum key distribution network NW_{QKD} includes a plurality of QKD nodes 10 that share a key using a quantum key distribution link (QKD link) L and a network thereof, and a QKDN controller 20 that performs network management and notifies the QKD nodes 10 of route information of a key relay.

### [QKD Node]

The QKD node (node) 10 is configured to share a key of a random number sequence by quantum key distribution via a QKD link L.

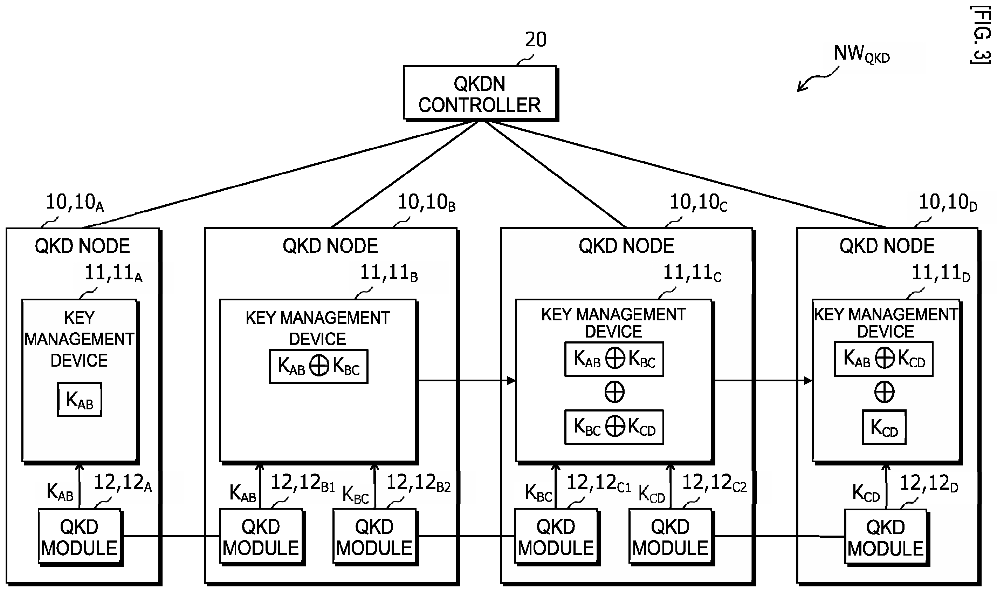

As shown in FIG. 3, the QKD node 10 includes a key management device 11 and a quantum key distribution module (QKD module) 12.

The key management device 11 is configured to hold a key that is generated by the QKD module 12 and supply a key to an application (the transmission device 1, the reception device 2, or the like) as necessary. Further, the key management device 11 is configured to perform a key relay according to route information that is notified from the QKDN controller 20.

The QKD module 12 is configured to share a key with another QKD module 12 of another QKD node 10 by transmitting/receiving photon pulses between the QKD module 12 and the other QKD module 12 of the other QKD node 10 via a QKD link L, which is an optical fiber, and by extracting, by key distillation, a random number sequence that is of a predetermined data length and that is secure and error-free. Because quantum key distribution is a known technique, a detailed description thereof will be omitted here.

### [QKDN Controller]

The QKDN controller (controller) 20 is configured to perform network management of the quantum key distribution network NW_{QKD}.

The QKDN controller 20 requests the QKD node 10 to generate a shared key via a communication line (not shown in Drawings) and notifies the QKD node 10 of route information indicating an order of nodes in a key relay.

The QKDN controller 20 sets a route from a colony C that includes a node (QKD node 10) serving as a start point of a key relay to a colony C that includes a node (QKD node 10) serving as an end point of the key relay so that each of the plurality of keys is routed through different colonies C.

### (Colony)

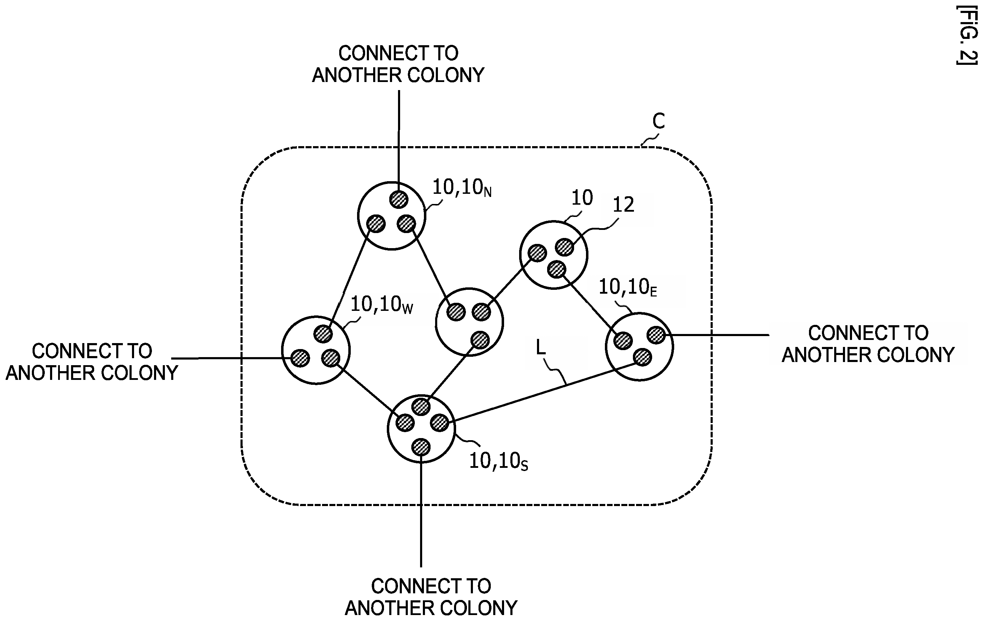

Here, the colony C will be described with reference to FIG. 2.

Colonies C are a plurality of independent node collections obtained by dividing all of the QKD nodes 10 into collections to equalize throughputs of key relays. Here, the term "independent" means that one colony C does not belong to a plurality of node collections.

Equalizing throughputs means that, for example, values of a predetermined criterion, such as a geographical factor or a key supply amount, are roughly equalized.

Here, the geographical factor is, for example, a division criterion for dividing QKD nodes 10 into colonies C so that distances between the colonies C are substantially equal to one another. Accordingly, when key relaying is performed for a plurality of keys through different routes, respective route distances tend to become approximately equal to each other.

The key supply amount is, for example, a division criterion based on the number of QKD modules 12 that may supply a key and that belong to a colony C. Accordingly, when key relaying is performed for a plurality of keys through different routes, a delay in key generation in each route tends to be suppressed, enabling key relaying to be performed efficiently.

Note that the division criterion may not have to rely on one criterion, and a plurality of criteria may be combined based on weights determined by priority.

The colonies C are defined in advance by dividing QKD nodes 10 into colonies C according to such a division criterion.

An inside of a colony C is a network in which QKD modules 12 are connected by a QKD link L.

QKD nodes 10 that serve as peripheral points (edges) between colonies C are determined in advance. For example, as shown in FIG. 2, QKD nodes 10_{E}, 10_{W}, 10_{S}, and 10_{N} that are eastern, western, southern, and northern peripheral points in the colony C are four peripheral points that connect to other colonies. The number of peripheral points here is an example, and two, three, or five or more peripheral points may be determined.

A colony C performs inter-colony key relaying between peripheral points with another colony, and performs key relaying from a key input peripheral point to a key output peripheral point within the colony C .

### (Key Relay)

With reference to FIG. 3, an example of a general key relay will be described. Here, an example of relaying a single key K_{AB} from a QKD node 10_{A} to a QKD node 10_{D}, with QKD nodes 10_{B} and 10_{C} as relay nodes, will be described.

The QKD nodes 10_{A} and 10_{B} share the key K_{AB} between QKD modules 12_{A} and 12_{B1}.

A key management device 11_{A} of the QKD node 10_{A} holds the key K_{AB} generated by the QKD module 12_{A} in a storage (not shown). The key K_{AB} is supplied to an application (for example, the transmission device 1 [FIG. 1]) as needed.

The QKD nodes 10_{B} and 10_{C} share a key K_{BC} between QKD modules 12_{B2} and 12_{C1}.

A key management device 11_{B} of the QKD node 10_{B} calculates an exclusive OR (XOR) of the key K_{AB}, which has been generated by the QKD module 12_{B1}, and the key K_{BC}, which has been generated by the QKD module 12_{B2}. The key management device 11_{B} transmits a result of said calculation (K_{AB} (XOR) K_{BC}) via a communication line to a link destination (QKD node 10_{C}) that has been notified by the QKDN controller 20 as route information.

QKD nodes 10_{C} and 10_{D} share a key K_{CD} between QKD modules 12_{C2} and 12_{D}.

A key management device 11_{C} of the QKD node 10_{C} calculates an exclusive OR (XOR) of the key K_{BC}, which has been generated by the QKD module 12_{C1}, and the key K_{CD}, which has been generated by the QKD module 12_{C2}. Further, the key management device 11_{C} calculates an exclusive OR (XOR) of a result of said calculation (K_{BC} (XOR) K_{CD}) and the calculation result (K_{AB} (XOR) K_{BC}) input from the key management device 11_{B} of the QKD node 10_{B}. The key management device 11_{C} transmits a result of said calculation (K_{AB} (XOR) K_{CD}) via a communication line to a link destination (QKD node 10_{D}) notified by the QKDN controller 20 as route information.

A key management device 11_{D} of the QKD node 10_{D} calculates an exclusive OR (XOR) of the calculation result (K_{AB} (XOR) K_{CD}), which has been transmitted from the QKD node 10_{C}, and the key K_{CD}, which has been generated by the QKD module 12_{D}. The key management device 11_{D} holds a result of said calculation (K_{AB}) in a storage (not shown). This key K_{AB} is supplied to an application (for example, the reception device 2 [FIG. 1]) as needed.

By this key relay, the key K_{AB} is transferred from the QKD node 10_{A} to the QKD node 10_{D} using the QKD nodes 10_{B} and 10_{C} as relay nodes.

Referring back to FIG. 1, the QKDN controller 20 will further be described.

As a method of setting links of key relays, the QKDN controller 20 sets a key relay, an example of which is shown in FIG. 3, on a route from a colony C_{S}, that includes a QKD node serving as a start point (here, the QKD node 10_{S}), to a colony C_{R}, that includes a node serving as an end point (here, the QKD node 10_{R}), via a colony C that is different for each of a plurality of keys.

The plurality of keys referred to here are keys (sub-keys) used by a QKD node 10 to generate a cryptographic key that is supplied to an application, such as the transmission device 1, and are keys from which an original key may be reconstructed only when all of the sub-keys are used.

For example, when a node serving as a start point generates a key K of a certain bit length from an exclusive OR of three keys (sub-keys) K₁, K₂, and K₃ having the same bit lengths as the key K, a node serving as an end point may only be able to reproduce the key (cryptographic key) K by obtaining the three keys K₁, K₂, and K₃ and calculating an exclusive OR of the three keys K₁, K₂, and K₃.

For example, when a node serving as a start point generates a key K of a certain bit length by concatenating three keys (sub-keys) K₁, K₂, and K₃ having bit lengths that are shorter than that of the key K, a node serving as an end point may only be able to reproduce the key (cryptographic key) K by obtaining and concatenating the three independent keys K₁, K₂, and K₃.

The QKDN controller 20 sets routes so that such a plurality of keys are relayed independently via different colonies C and notifies QKD nodes 10 of the route information.

The QKDN controller 20 regards a colony C as a single node and configures routes so that a different route is set for each of the plurality of keys ensuring that one QKD node 10 does not supply keys to a plurality of routes.

Each colony C is allowed to participate in key relaying of one route only. The colony C has one input and one output, that is, only one key (sub-key) is input and output. In a colony C, key relaying is executed multiple times by QKD nodes 10.

When setting a route across colonies C, the QKDN controller 20 sets a route with a smallest key usage amount based on a key supply amount of a colony C as a whole.

Input and output peripheral points of a colony C are, for example, QKD nodes 10 that are closest to another colony C serving as a connection destination of a route.

These routes may be predetermined when the start point and end point are known, or may be searched by the QKDN controller 20 in real time.

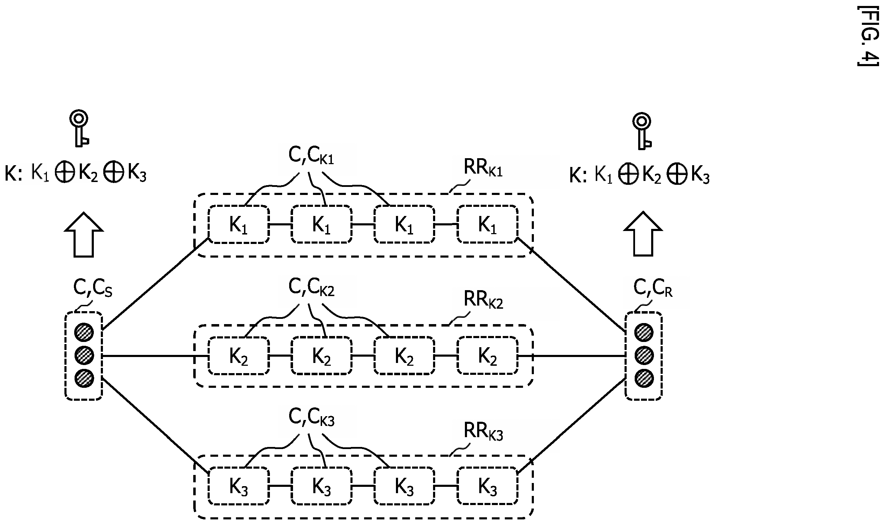

In this way, a plurality of keys may be relayed over a plurality of different routes, as shown in FIG. 4 for example.

In the example of FIG. 4, a plurality of keys K₁, K₂, and K₃ are respectively relayed by key relaying through different key relay routes RR_{K1}, RR_{K2}, and RR_{K3} from a starting colony C_{S} to an ending colony C_{R}.

The key relay route RR_{K1} is configured to include a plurality of colonies C_{K1} that perform key relaying of the key K₁. The key relay route RR_{K2} is configured to include a plurality of colonies C_{K2} that perform key relaying of the key K₂. The key relay route RR_{K3} is configured to include a plurality of colonies C_{K3} that perform key relaying of the key K₃.

In this way, the QKDN controller 20 may relay a plurality of keys through different key relay routes RR, and may guarantee information-theoretic security.

Further, because the colonies C are node collections that have been configured to divide nodes into collections so as to equalize throughputs, efficiency of key relaying may be made substantially uniform regardless of which key relay route RR is taken.

### [Operation of Quantum Key Distribution Network]

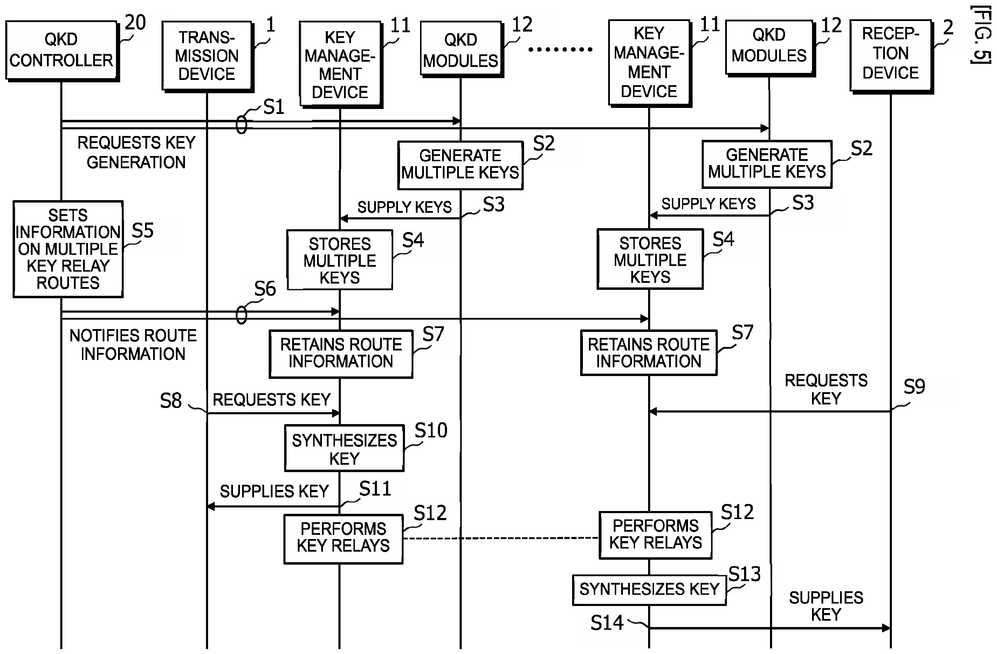

Next, an operation of the quantum key distribution network NW_{QKD} will be described with reference to FIG. 5 (and FIGS. 1 and 3 when appropriate). Here, an operation of performing key relays of a plurality of keys, which are for generating a cryptographic key that is used when transmitting encrypted data from the transmission device 1 to the reception device 2, through a plurality of routes will be described.

In step S1, the QKDN controller 20 requests each of a plurality of QKD modules 12 of a QKD node 10 to generate a key that is shared with another QKD module 12 on an opposite side of a pre-connected QKD link L.

In step S2, the plurality of QKD modules 12 of a QKD node 10 generate a shared key by transmitting or receiving photon pulses over a QKD link L and extracting a random number sequence that is of a predetermined data length and that is secure and error-free by key distillation. At this time, the QKD node 10 generates a plurality of keys consisting of a key for each QKD link L in accordance with the number of the plurality of QKD modules 12.

In step S3, the plurality of QKD modules 12 of the QKD node 10 supply the generated plurality of keys to a key management device 11.

In step S4, the key management device 11 stores the keys supplied in step S3 in a storage (not shown).

In step S5, the QKDN controller 20 sets route information so that, between a colony Cs including a start point QKD node 10s corresponding to the transmission device 1 and a colony C_{R} including an end point QKD node 10_{R} corresponding to the reception device 2, each of a plurality of keys traverses a different colony so that no single QKD node 10 supplies keys to a plurality of routes.

In step S6, the QKDN controller 20 notifies the key management device 11 of the QKD node 10 of the route information that has been set in step S5.

In step S7, the key management device 11 of the QKD node 10 retains the route information notified in step S6.

In step S8, the transmission device 1 requests a key from a key management device 11 of the start point QKD node 10 corresponding to the transmission device 1. In this example, it is assumed that the transmission device 1 requests the key management device 11 to provide a key K that is an exclusive OR of three keys (sub-keys) K₁, K₂, and K₃, as shown in the example of FIG. 4.

In step S9, the reception device 2 requests a key from a key management device 11 of the end point QKD node 10 corresponding to the reception device 2. Here in this example, it is assumed that the reception device 2 requests the key management device 11 to provide a key K that is an exclusive OR of three keys (sub-keys) K₁, K₂, and K₃, similarly to the transmission device 1.

In step S10, a key management device 11 combines a plurality of keys stored in step S4. Here, as an example of FIG. 4, an exclusive OR of three keys K₁, K₂, and K₃ is calculated to generate a cryptographic key (key K) that is shared with the reception device 2.

In step S11, the key management device 11 supplies the synthesized cryptographic key (key K) to the transmission device 1.

In step S12, key management devices 11 perform key relaying of the plurality of keys, which have been used to generate the cryptographic key in step S10, through different routes in accordance with the route information held in step S7.

In the example of FIG. 4, the key management devices 11 perform key relaying of the keys K₁, K₂, and K₃, which have been used to generate the cryptographic key K, through different key relay routes RR_{K1}, RR_{K2}, and RR_{K3}.

This enables a key management device 11 of the end point QKD node 10 corresponding to the reception device 2 to obtain the plurality of keys through different key relay routes.

In step S13, the key management device 11 combines the plurality of keys obtained in step S12. Here, as an example of FIG. 4, an exclusive OR of the three keys K₁, K₂, and K₃ is calculated to generate a cryptographic key (key K) that is shared with the transmission device 1.

In step S14, the key management device 11 supplies the synthesized cryptographic key (key K) to the reception device 2.

This enables the transmission device 1 and the reception device 2 to transmit and receive encrypted data by one-time pad encryption using a shared cryptographic key.

During this process, a plurality of keys are relayed by key relays through routes that have been predetermined to equalize the throughputs of the key relays. Therefore, in the quantum key distribution network NW_{QKD}, a single key relay does not cause a large delay, and the cryptographic key to be used by the reception device 2 may be efficiently supplied.

### [Configuration of Data Relay System]

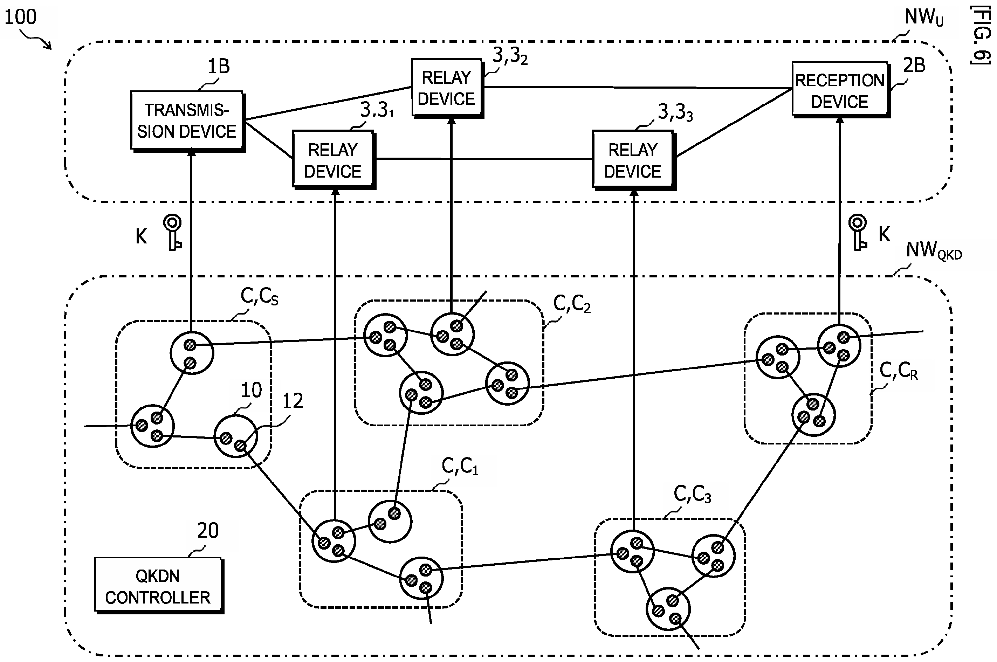

Next, a configuration of a data relay system 100 according to a second embodiment of the present invention will be described with reference to FIG. 6. FIG. 6 is a configuration diagram showing an example of the data relay system 100 configured over the quantum key distribution network NW_{QKD} that has been described with reference to FIG. 1.

Description of the quantum key distribution network NW_{QKD} will be omitted as the configuration thereof is the same as that described with reference to FIG. 1.

In this embodiment, the data relay system 100 relays data from a transmission device 1B to a reception device 2B on a user network NW_{U} that is an existing communication network (such as the Internet) by splitting the data into shares using a secret sharing scheme and relaying the shares through respective, different routes via relay devices 3.

Note that the routes of the shares from the transmission device 1B to the reception device 2B are the same as the routes of the key relays in the quantum key distribution network NW_{QKD}. For example, here, the routes of the shares are collectively managed by the QKDN controller 20.

The transmission device 1B is configured to encrypt (with one-time pad encryption) original data with a cryptographic key (key K) supplied from the quantum key distribution network NW_{QKD}, split the encrypted data into a plurality of pieces of data (shares) by a secret sharing scheme, and transmit the respective shares to the reception device 2B through different routes.

A general scheme may be used as the secret sharing scheme. For example, the transmission device 1B uses a (k, n) threshold scheme as the secret sharing scheme to split the encrypted data into n shares so that the original data is not restorable with k-1 shares.

A colony C corresponding to the transmission device 1B performs key relays by routing a plurality of keys for generating the cryptographic key through different routes. From the encrypted data (original data that has been encrypted), the transmission device 1B generates the same number of shares as the number of keys for generating the cryptographic key.

The reception device 2B is configured to receive the plurality of shares via relay devices 3, restore the encrypted data by the secret sharing scheme, and decrypt the encrypted data using the cryptographic key (key K) supplied from the quantum key distribution network NW_{QKD}, thereby restoring the original data.

A relay device 3 is configured to relay a share between the transmission device 1B and the reception device 2B. The relay device 3 may be a share holder that stores therein a received share and delivers the share in response to a request.

The transmission device 1B, the reception device 2B, and the relay device 3 correspond to QKD nodes 10 belonging to different colonies C of the quantum key distribution network NW_{QKD}.

The transmission device 1B, the relay device 3, and the reception device 2B may each be a device that is integrated with a corresponding QKD node 10.

### [Data Relay Method of Data Relay System]

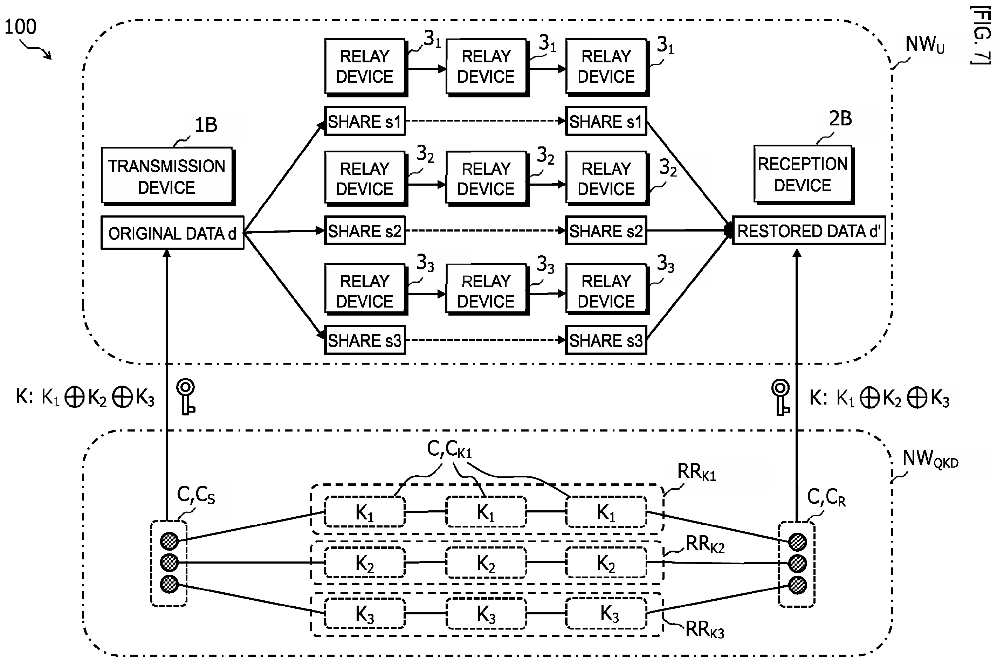

A data relay method of the data relay system 100 will be described more specifically with reference to FIG. 7.

Here in this example, similarly to the key relay routes described in FIG. 4, it is assumed that a plurality of keys K₁, K₂, and K₃ are relayed by key relaying from a starting colony C_{S} to an ending colony C_{R} via different key relay routes RR_{K1}, RR_{K2}, and RR_{K3} respectively.

The key relays for the keys K₁, K₂, and K₃ are the same as the key relays described with reference to FIG. 4.

On the user network NW_{U}, a transmission device 1B, corresponding to a QKD node (not shown) belonging to the starting colony C_{S}, and a reception device 2B, corresponding to a QKD node (not shown) belonging to the ending colony C_{R}, are arranged.

A relay device 3₁ that relays the share s1 is arranged in correspondence with a QKD node (not shown) belonging to a colony C corresponding to the key relay route RR_{K1} that relays the key K₁. A relay device 3₂ that relays the share s2 is arranged in correspondence with a QKD node (not shown) belonging to a colony C corresponding to the key relay route RR_{K2} that relays the key K₂. A relay device 3₃ that relays the share s3 is arranged in correspondence with a QKD node (not shown) belonging to a colony C corresponding to the key relay route RR_{K3} that relays the key K₃.

The transmission device 1B receives a cryptographic key (key K) from a QKD node belonging to the starting colony C_{S}, and encrypts the original data d with the cryptographic key K (one time pad encryption).

The transmission device 1B splits the encrypted data, which has been encrypted with the cryptographic key K, into three shares (shares s1 to s3) by a secret sharing scheme.

Then, the transmission device 1B relays the share s1 by the relay device 3₁ installed in correspondence with a colony C_{K1} that relays the key K₁ of the key relay route RR_{K1}.

The transmission device 1B relays the share s2 by the relay device 3₂ installed in correspondence with a colony that relays the key K₂ of the key relay route RR_{K2}.

The transmission device 1B relays the share s3 by the relay device 3₃ installed in correspondence with a colony that relays the key K₃ of the key relay route RR_{K3}.

The reception device 2B receives the three shares (shares s1 to s3) that have been relayed and generates the original encrypted data by the secret sharing scheme. The reception device 2B receives the cryptographic key (key K) from a QKD node belonging to the ending colony C_{R}, and decrypts the encrypted data to generate restored data d' thereby restoring the original data d.

Thus, the data relay system 100 may transmit data in a distributed manner using a secret sharing scheme while equalizing throughputs of the plurality of key relay routes.

Because each share is relayed through a different route corresponding to a key relay route, even when an incident occurs in a QKD node corresponding to a certain share, the data may be restored.

As described above, the data relay system 100 may realize an information-theoretically secure and highly efficient data relay through key relaying by the quantum key distribution network NW_{QKD} and through a secret sharing of data encrypted with a one-time pad encryption.

As described above, the present invention may equalize throughput and key relay efficiency of the system as a whole by introducing the concept of colonies in the quantum key distribution network NW_{QKD} and equalizing throughputs and key relay efficiencies of individual routes.

Further, the present invention may reduce security requirements imposed on the QKD node to be a "trusted node" and may therefore accelerate a realization of a key supplying business that uses the quantum key distribution network NW_{QKD}.

### Reference Signs List

- NW_{QKD}: Quantum key distribution network
- NW_{U}: User network (communication network)
- 1: Transmission device
- 2: Reception device
- 10: QKD node (node)
- 11: Key management device
- 12: QKD module
- 20: QKDN controller (controller)
- C: Colony (node collection)
- L: QKD link (quantum key distribution link)
- RR: Key relay route
- 100: Data relay system
- 1B: Transmission device
- 2B: Reception device
- 3: Relay device
- s1, s2, s3: Share

## Claims

1. A quantum key distribution network that independently distributes, by quantum key distribution, a plurality of keys used for generating a shared cryptographic key, the quantum key distribution network comprising:
a plurality of nodes configured to perform key relays by a quantum key distribution link and a network thereof; and
a controller configured to perform network management, wherein
the controller is configured to: divide the plurality of nodes into a plurality of independent node collections so as to equalize throughputs of the key relays; and set routes from a node collection including a first node that is a start point of the key relays to a node collection including a second node that is an end point of the key relays so that a route for each key traverses a different node collection so that a single node does not supply keys to a plurality of routes, and
for each of the keys, a key relay from the first node that is the start point to the second node that is the end point is performed through a respective route that is different for each key and that has been set by the controller, and the first node that is the start point and the second node that is the end point generate the shared cryptographic key by performing an exclusive OR or a concatenation of the plurality of keys.

2. A key relay link setting method for independently distributing a plurality of keys in a quantum key distribution network that is configured to include a plurality of nodes that perform key relays by a quantum key distribution link and a network thereof, the key relay link setting method comprising:
by a controller that performs network management of the quantum key distribution network,
dividing the plurality of nodes into a plurality of independent node collections so as to equalize throughputs of the key relays, and setting routes from a node collection including a first node that is a start point of the key relays to a node collection including a second node that is an end point of the key relays so that a route for each of the keys traverses a different node collection so that a single node does not supply keys to a plurality of routes.

3. A data relay system that is supplied with a cryptographic key by a quantum key distribution network for relaying data in a communication network, the quantum key distribution network including: a plurality of nodes configured to perform key relays by a quantum key distribution link and a network thereof; and a controller configured to perform network management by: dividing the plurality of nodes into a plurality of independent node collections so as to equalize throughputs of the key relays; and setting routes from a node collection including a first node that is a start point of the key relays to a node collection including a second node that is an end point of the key relays so that a route for each of a plurality of keys used for generating the cryptographic key traverses a different node collection so that a single node does not supply keys to a plurality of routes, wherein
the data relay system comprises:
a transmission device that corresponds to the first node that is the start point, that encrypts original data with the cryptographic key, and that transmits the encrypted original data in a distributed manner as a plurality of shares by a secret sharing scheme;
relay devices that correspond to nodes forming a different route for each of the plurality of keys and that relay the plurality of shares; and
a reception device that corresponds to the second node that is the end point, that receives the plurality of shares, that restores by the secret sharing scheme, and that obtains the original data through decryption using the cryptographic key.

4. A data relay method for relaying data in a communication network when a cryptographic key is supplied by a quantum key distribution network, the quantum key distribution network including:
a plurality of nodes configured to perform key relays by a quantum key distribution link and a network thereof; and
a controller configured to perform network management by:
dividing the plurality of nodes into a plurality of independent node collections so as to equalize throughputs of the key relays; and
setting routes from a node collection including a first node that is a start point of the key relays to a node collection including a second node that is an end point of the key relays so that a route for each of a plurality of keys used for generating the cryptographic key traverses a different node collection so that a single node does not supply keys to a plurality of routes, wherein
the data relay method comprises:
encrypting original data with the cryptographic key and splitting the encrypted original data into a plurality of shares using a secret sharing scheme by a transmission device corresponding to the first node that is the start point;
relaying the plurality of shares through the communication network by distributing the plurality of shares across relay devices that correspond to nodes that form a different route for each of the plurality of keys; and
receiving the plurality of shares, restoring by the secret sharing scheme, and obtaining the original data through decryption using the cryptographic key by a reception device that corresponds to the second node that is the end point.
